Europäisches Patentamt

European Patent Office

Office européen des brevets

(19)

(11) Veröffentlichungsnummer: **0 011 209**
**B1**

(12) # EUROPÄISCHE PATENTSCHRIFT

(45) Veröffentlichungstag der Patentschrift:
08.06.83

(21) Anmeldenummer: 79104310.2

(22) Anmeldetag: 05.11.79

(51) Int. Cl.³: **C 08 G 77/38**, C 09 J 7/02,
C 09 D 3/82

(54) **Verwendung von Lösungen von metalloxidgruppenhaltigen Polysiloxanen zur haftungsmindernden Ausrüstung von Oberflächen.**

(30) Priorität: 17.11.78 DE 2849850

(43) Veröffentlichungstag der Anmeldung:
28.05.80 Patentblatt 80/11

(45) Bekanntmachung des Hinweises auf die Patenterteilung:
08.06.83 Patentblatt 83/23

(84) Benannte Vertragsstaaten:
AT BE CH DE FR GB IT NL SE

(56) Entgegenhaltungen:
DE-A-2 251 042
FR-A-1 308 055
GB-A-723 989
GB-A-953 458
GB-A-1 300 922
US-A-3 679 458
US-A-4 151 344

CHEMICAL ABSTRACTS, Band 84, Nr. 6, 9. Februar 1976, Seite 91, Zusammenfassung 32665w. Columbus, Ohio, USA TERTYKH, L.I. et al. «Organosilicon metallopolymers and coatings based on them»

Die Akte enthält technische Angaben, die nach dem Eingang der Anmeldung eingereicht wurden und die nicht in dieser Patentschrift enthalten sind.

(73) Patentinhaber: BAYER AG, Zentralbereich Patente, Marken und Lizenzen, D-5090 Leverkusen 1, Bayerwerk (DE)

(72) Erfinder: Steinbach, Hans-Horst, Dr., Im Birkeishof 1, D-5060 Bergisch-Gladbach 2 (DE)
Erfinder: Schnurrbusch, Karl, Dr., Kurt-Schumacher-Ring 154, D-5090 Leverkusen 1 (DE)
Erfinder: Rieder, Matthias, Belenburger Strasse 22, D-5064 Rösrath (DE)

Verwendung von Lösungen von metalloxidgruppenhaltigen Polysiloxanen zur haftungsmindernden Ausrüstung von Oberflächen.

Die vorliegende Erfindung betrifft ein Verfahren zur Herstellung einer die Haftung mindernden Beschichtung auf glatten oder rauhen Oberflächen mit dem Ziel, das An- und Festkleben von Plakaten, Selbstklebefolien und ähnlichen Druckerzeugnissen an unerwünschten Stellen, z.B. an Gebäuden, zu verhindern.

Bei der Herstellung von Trennmitteln für die verschiedensten Anwendungsgebiete werden heute vielfach Organopolysiloxane eingesetzt. Ihre ausgezeichneten Trenneigenschaften werden bei der Entformung zahlreicher Artikel genutzt. Organopolysiloxane allein sind jedoch nicht in der Lage, das Ankleben von z.B. Druckerzeugnissen an Häuserwänden usw. in ausreichendem Masse zu verhindern.

Durch das immer häufiger werdende unbefugte Ankleben von Plakaten entstand gerade in letzter Zeit das Bedürfnis nach einem einfachen Verfahren zur Herstellung eines Überzugs auf den entsprechenden Flächen, der ein unerwünschtes Ankleben von Druckschriften oder Plakaten unmöglich macht, der sich in einfacher Weise aufbringen lässt, der selbst praktisch nicht sichtbar ist und der auch in anderer Weise keine störenden Eigenschaften aufweist.

Gegenstand der vorliegenden Erfindung ist daher die Verwendung eines Mittels zur Herstellung einer die Haftung mindernden Beschichtung auf glatten oder rauhen Oberflächen durch Aufbringen von Organopolysiloxanen, welches Mittel 60 bis 90 Gew.-Teile eines organischen Lösungsmittels und 10 bis 40 Gew.-Teile einer metalloxidgruppenhaltigen Polysiloxanverbindung mit 1 bis 100 SiO-Gruppen pro Metalloxid enthält.

Es hat sich überraschenderweise herausgestellt, dass aus dem grossen Angebot verschiedenster Organopolysiloxane solche, bei denen in der Siloxankette z.B. MgO, AlO-, SnO-, TiO- oder ZrO-Gruppen, oder allgemein ausgedrückt Metalloxidkettenglieder, eingebracht sind, sich für den gewünschten Zweck eignen.

Das erfindungsgemässe Verfahren erlaubt es, die verschiedensten Oberflächen, wie z.B. Glas, Holz, Kunststoff, Metall, Beton, Stein oder lackierte Oberflächen, mit einem Trennfilm auszurüsten, der ein Ankleben und Anhaften von Papier, das mit den üblichen Plakatklebern angeklebt wird, unmöglich macht. Plakate, die mit handelsüblichen Leimen und Kleistern auf die silikonisierten Untergründe geklebt werden, zeigen nach dem Trocknen praktisch keine Haftung und fallen ab. Auch bei Verwendung besonders ausgewählter Klebstoffe wird ein festes Anhaften des Papiers unmöglich gemacht. Die Plakate lassen sich sehr leicht und ohne Wasser durch einfaches Abziehen wieder entfernen.

Geeignete Mittel für das erfindungsgemässe Verfahren sind Organopolysiloxane, wie z.B. Polydimethylsiloxane mit einer Viskosität von $10^{-4}$ bis $10^{-1}$ m² · s¹.

Der Einbau der Metalloxidgruppen in die Polysiloxanverbindungen kann z.B. durch Grignard-Reaktion erfolgen. Er lässt sich aber auch in einfacher Weise durch Verrühren eines mehrbasischen Metallesters mit einem Polydiorganosiloxan herstellen. Als Ester eignen sich z.B. Butyltitanat, Butylzirkonat, Dibutylzinndilaurat, Magnesiumäthylat oder Aluminiumäthylat. Der Gehalt an Metalloxidgruppen im Polysiloxan sollte so bemessen sein, dass pro Metalloxid etwa 1–100 SiO-Gruppen vorliegen.

Die für das erfindungsgemässe Verfahren geeigneten metalloxidhaltigen Polysiloxane werden in organischen Lösungsmitteln, wie z.B. Methylenchlorid, Perchloräthylen, 1,1,1-Trichloräthan, Benzinfraktionen u.a., angewandt. Sie erhalten 60 bis 90 Gew.-Teile organisches Lösungsmittel, vorzugsweise 70 bis 80 Gew.-Teile und 10 bis 40 Gew.-Teile, vorzugsweise 20 bis 30 Gew.-Teile, der Polysiloxanmetalloxidverbindung.

Das erfindungsgemässe Verfahren wird in der Weise durchgeführt, dass die zu behandelnden trockenen Oberflächen durch Aufsprühen z.B. mit einer Sprühpistole oder einer entsprechenden Sprühvorrichtung, durch Tauchen oder mit Hilfe einer Rolle, eines Pinsels oder ähnlichem beschichtet werden. Der Untergrund zeigt nach dem Verdampfen des Lösungsmittels keine Veränderung seines Aussehens. Er wirkt wasserabweisend und unterscheidet sich dadurch von unbehandelten Oberflächen. Auf transparenten Untergründen, wie z.B. Klarscheiben, ist ein Nachpolieren des Trennmittelfilmes möglich, so dass eine Sichtbeeinträchtigung nicht auftritt. Die Eigenschaften des Produktes bleiben jedoch dabei unverändert.

Das erfindungsgemässe Verfahren eignet sich zur Behandlung von Oberflächen aller Art, insbesondere aber zur Behandlung von Glas, Holz, Kunststoff, Metall, Beton, Stein und lackierten Oberflächen, und hat sich besonders bewährt bei der Beschichtung von Holz-, Beton- und Ziegelwänden, Garagentoren, Schalt- und Schaukästen, Glastüren, Wartehäuschen, Relais-Stationen usw.

Das erfindungsgemässe Verfahren soll nun anhand der folgenden Beispiele noch näher erläutert werden. Die Angabe «Teile» in den folgenden Beispielen bezieht sich auf Gewichtsteile.

Beispiel 1

Die Herstellung des erfindungsgemäss einzusetzenden Mittels erfolgt in folgender Weise:

Zu 34,2 Teilen eines Polydimethylsiloxans der Viskosität $10^{-3}$ m² · s⁻¹ werden unter Rühren langsam 6,9 Teile Tetrabutyltitanat und weitere 6,9 Teile Polybutyltitanat (gebildet durch Hydrolyse von Butyltitanat) zugegeben. Dadurch erhält man einen starken Anstieg der Viskosität, die schliesslich wieder auf 5 bis 20 · $10^{-4}$ m²s⁻¹ abfällt. Nach einstündigem Rühren werden 50 Teile Test-Benzin mit Siedebereich von ca. 140–180°C zugegeben und nach weiterer Rührzeit von 10 Minuten gibt man 150 Teile 1,1,1-Trichloräthan zu. Es entsteht eine dünnflüssige Lösung mit beschriebener «Antiplakat-Kleber»-Wirkung.

Beispiel 2

Ersetzt man in Beispiel 1 den Titanbutylester durch Zirkonester, wie z.B. Tetrabutylzirkonat, und verfährt wie in Beispiel 1 beschrieben, erhält man Produkte mit vergleichbaren Eigenschaften.

Beispiel 3

Ersetzt man in Beispiel 1 den Titanbutylester durch Dibutylzinndilaurat, und verfährt wie in Beispiel 1 beschrieben, erhält man Produkte mit vergleichbaren Eigenschaften.

Beispiel 4 (Vergleich)

Ersetzt man in Beispiel 1 den Titanbutylester durch Borsäuretrimethylester und verfährt wie in Beispiel 1 beschrieben, erhält man Produkte, die die gewünschten Eigenschaften nicht zeigen.

Beispiel 5

Ersetzt man den Titanester in Beispiel 1 durch Magnesiumäthylat und Aluminiumäthylat, so erhält man Verbindungen mit vergleichbaren Eigenschaften.

Das nach Beispiel 1 und 2 hergestellte Gemisch wird zur Prüfung der Antiplakatkleber-Wirkung auf trockenen Untergrund gleichmässig und satt aufgetragen. Seine Trenneigenschaften sind so vorzüglich, dass selbst das Anbringen von farbigen Schriftzügen zu Schwierigkeiten führt. Sie lassen sich in Abhängigkeit von der verwendeten Lackart von den behandelten Untergründen in vielen Fällen leicht entfernen.

**Patentanspruch**

Verwendung eines Mittels, das 60 bis 90 Gew.-Teile organisches Lösungsmittel und 10 bis 40 Gew.-Teile eines metalloxidgruppenhaltigen Polysiloxans mit 1 bis 100 SiO-Gruppen pro Metalloxidgruppe enthält, zur haftungsmindernden Beschichtung von glatten oder rauhen Oberflächen, insbesondere für Gebäudewände.

**Claim**

Use of a composition containing 60 to 90 parts by weight of an organic solvent and 10 to 40 parts by weight of a metal-oxide-group-containing polysiloxane having 1 to 100 SiO groups per metal oxide group, for the adhesion-reducing coating of smooth or rough surfaces, in particular for walls of buildings.

**Revendication**

Application d'un agent, qui contient 60 à 90 parties en poids d'un solvant organique et 10 à 40 parties en poids d'un polysiloxanne contenant des groupes oxyde de métal, avec 1 à 100 groupes SiO par groupe oxyde de métal, pour une enduction, à rôle de diminution de l'adhérence, de surfaces lisses ou rugueuses, en particulier pour murs et parois de bâtiments.